(19) Europäisches Patentamt / European Patent Office / Office européen des brevets

(11) **EP 3 161 392 B1**

(12) **EUROPEAN PATENT SPECIFICATION**

(45) Date of publication and mention
of the grant of the patent:
**21.03.2018 Bulletin 2018/12**

(21) Application number: **15733547.2**

(22) Date of filing: **18.06.2015**

(51) Int Cl.:
*B60H 1/00* *(2006.01)*    *B60H 1/32* *(2006.01)*
*F25B 49/02* *(2006.01)*    *F25B 29/00* *(2006.01)*
*F25B 5/04* *(2006.01)*

(86) International application number:
**PCT/JP2015/003056**

(87) International publication number:
**WO 2015/198564 (30.12.2015 Gazette 2015/52)**

(54) **HEAT PUMP CYCLE DEVICE**

WÄRMEPUMPENKREISLAUFVORRICHTUNG

DISPOSITIF DE CYCLE DE POMPE À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2014 JP 2014130485**

(43) Date of publication of application:
**03.05.2017 Bulletin 2017/18**

(73) Proprietors:
• **DENSO CORPORATION**
  **Kariya-city, Aichi 448-8661 (JP)**
• **DENSO THERMAL SYSTEMS S.p.A.**
  **10046 Poirino (Torino) (IT)**

(72) Inventors:
• **TAHARA, Toshihiro**
  **Kariya-city**
  **Aichi 448-8661 (JP)**
• **VITALI, Domenico**
  **I-10046 Poirino (Torino) (IT)**
• **VERA, Emilio**
  **I-10046 Poirino (Torino) (IT)**

(74) Representative: **Vigand, Philippe et al**
  **Novagraaf International SA**
  **Chemin de l'Echo 3**
  **1213 Onex - Genève (CH)**

(56) References cited:
JP-A- 2001 324 237    US-A1- 2005 194 125
US-B1- 6 293 123

## Description

### Field

The present disclosure is related to a heat pump cycle device which absorbs heat from open air to heat a heating target fluid.

### Background

Conventional heat pump cycle devices, such as that of Patent Literature 1, are known. In the heat pump cycle device of Patent Literature 1, when the outside air temperature (i.e., open air temperature) becomes extremely low, the devices constituting the heat pump cycle are protected. This is done by reducing a target rotational speed of a compressor, so that the compressor is constrained to operate at a reduced rotational speed.

### Citation List

### Patent Literature

Patent Literature 1: JP 2011-140291 A
Patent Literature 2: US 6293123 B1 relates to a refrigeration cycle device and discloses a heat pump cycle according to the preamble of claim 1.

### Summary

However, in conventional heat pump cycle devices, if the compressor is driven with respect to an intake refrigerant temperature, there is a concern that the rotational speed of the compressor may repeatedly increase and decrease in an oscillatory manner when, e.g., the open air temperature is low. That is, the rotational speed of the compressor may exhibit so-called hunting oscillation. This hunting oscillation occurs as a result of driving the compressor at a reduced rotational speed when the intake refrigerant temperature falls below a threshold temperature, and then driving the compressor at a normal rotational speed when the intake refrigerant temperature rises above the threshold temperature. When the compressor exhibits hunting oscillation as described above, there is a concern that the compressor may produce discomforting noise.

In view of the above, it is an object of the present disclosure to provide a heat pump cycle device that reduces hunting oscillation of a compressor when the open air temperature is low.

According to the present invention the above objective is solved by the features of claim 1.

Thus, after the compressor performs the speed reduction operation, even if the intake refrigerant temperature reaches at least the first predetermined temperature, until the intake refrigerant temperature reaches the second predetermined temperature which is higher than the first predetermined, the maximum allowed rotational speed of the compressor is limited to a predetermined speed by the limited speed operation. This predetermined speed is lower than a maximum allowed rotational speed during the normal operation. Accordingly, when the speed control operation is called off and the control process tries to return to the normal operation, the rotational speed of the compressor, which was reduced by the speed reduction operation, is limited by the limited speed operation. Specifically, the limited speed operation limits the rise of the rotational speed of the compressor until the intake refrigerant temperature reaches the second predetermined temperature, thereby restraining the rotational speed of the compressor from rapidly returning to the target rotational speed. Therefore, after the speed reduction operation, even if the intake refrigerant temperature returns to at least the first predetermined temperature, the control process does not immediately return to the normal operation. For this reason, sudden changes in the rotational speed may be suppressed. Further, even if the intake refrigerant temperature falls below the first predetermined temperature during the limited speed operation after the speed reduction operation was previously performed, changes in the rotational speed is suppressed. As a result, hunting oscillation in the rotational speed of the compressor when the open air temperature is low may be prevented. Here, "after the speed reduction was previously performed" refers to both a case where the speed reduction operation is performed, as well as a case where immediately after the speed reduction operation is performed, another operation other than this speed reduction operation and the normal operation is performed.

**Brief Description of Drawings**

[fig.1]Figure 1 is a schematic view showing an outline configuration of a vehicle air conditioning unit including a heat pump cycle device according a first embodiment of the present disclosure.

[fig.2]Figure 2 is a block diagram of an electronic control unit of the vehicle air conditioning unit of the first embodiment.

[fig.3]Figure 3 is a flowchart showing an air conditioning control process operated by the vehicle air conditioning unit of the first embodiment.

[fig.4]Figure 4 is a flow chart showing a compressor control process during a heating operation and operated by the vehicle air conditioning unit of the first embodiment.

[fig.5]Figure 5 is a graph showing a maximum allowed rotational speed when the compressor is operated in a limited speed operation by the vehicle air conditioning unit of the first embodiment.

[fig.6]Figure 6 is a schematic view showing the vehicle air conditioning unit of the first embodiment during a cooling operation.

[fig.7]Figure 7 is a schematic view showing the vehicle air conditioning unit of the first embodiment during a dehumidification heating operation.

[fig.8]Figure 8 is a schematic view showing the vehicle air conditioning unit of the first embodiment during a heating operation.

[fig.9]Figure 9 is a time chart showing an example of changes in an intake refrigerant temperature and changes in the rotational speed of the compressor according to the first embodiment.

[fig.10]Figure 10 is a time chart showing an example of changes in the intake refrigerant temperature and changes in the rotational speed of the compressor according to a comparative example.

[fig.11]Figure 11 is a flow chart showing a compressor control process during a heating operation and operated by the vehicle air conditioning unit of a second embodiment.

[fig.12]Figure 12 is a schematic view showing an outline configuration of a vehicle air conditioning unit including a heat pump cycle device according a third embodiment.

**Description of Embodiments**

Embodiments of the present disclosure will be described below with reference to the drawings. Portions of each embodiment corresponding to matters which have been described in previous embodiments may be denoted by the same reference numerals, and repeated descriptions thereof may be omitted. When only a part of the structure of each embodiment is described, the other embodiments having been previously described may be applied to the other parts of the structure. In addition to combinations that are specifically described in each embodiment, the embodiments may be combined with each other in other ways even if such a combination is not described specifically, if a problem does not particularly occur in such a combination.

(First Embodiment)

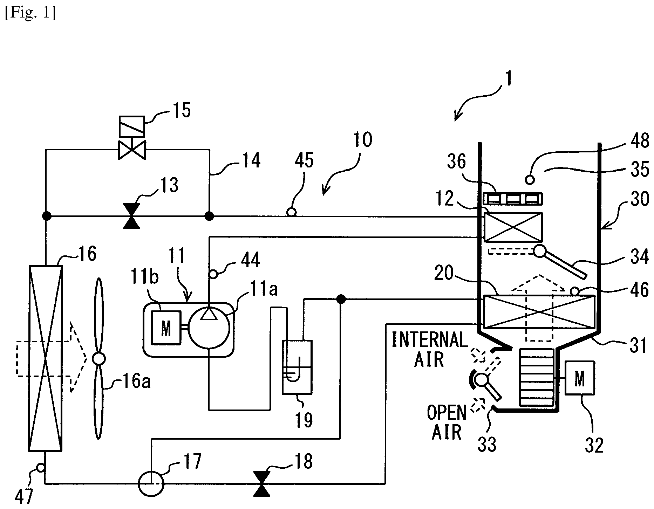

A first embodiment of the present disclosure will be explained with reference to figures 1 to 10. In the present embodiment, a heat pump cycle 10 is a heat pump cycle device for a vehicle air conditioning unit 1. The heat pump cycle 10 is a vapor-compression refrigeration cycle. As part of the vehicle air conditioning unit 1, the heat pump cycle 10 cools and heats ventilation air being ventilated into an interior (or cabin) of a vehicle, i.e., an air conditioning target space. Accordingly, a heating target fluid of the present embodiment is the conditioned air being blown into the interior of the vehicle.

The vehicle air conditioning unit 1 of the present embodiment may be for, e.g., an electric automobile being driven by an electric motor. The electric automobile, when stopped, charges a power storage device such as a battery by providing electric power to the battery from an external source. Then, the electric power stored in the battery is provided to the electric motor to drive the electric automobile.

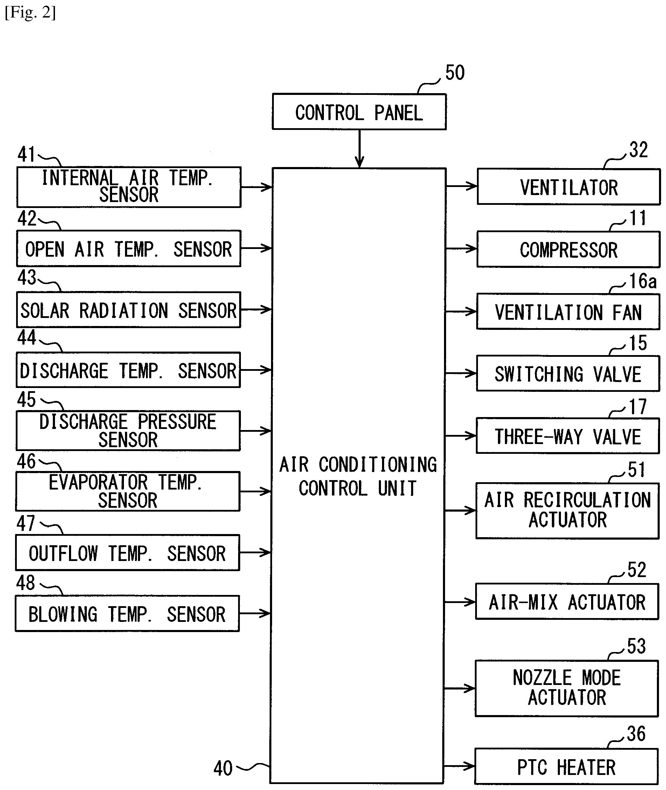

As shown in figures 1 and 2, the vehicle air conditioning unit 1 includes the heat pump cycle 10, an internal air conditioning unit 30, and an air conditioning control unit 40. The internal air conditioning unit 30 blows temperature controlled ventilation air into the interior of the vehicle. The ventilation air is temperature controlled due to heating and cooling by the heat pump cycle 10. The air conditioning control unit 40 is a controller that controls various electrical components in the vehicle air conditioning unit 1.

The heat pump cycle 10 may, for example, switch between three refrigerant circuits corresponding to three air conditioning operation modes. A first refrigerant circuit operates in a cooling mode by cooling the ventilation air to cool the interior of the vehicle. A second refrigerant circuit operates in a heating mode by heating the ventilation air to heat the interior of the vehicle. A third refrigerant circuit operates in a dehumidification heating mode by cooling and then heating the ventilation air to dehumidify and heat the interior of the vehicle. In addition, when the heat pump cycle 10 is operating in the heating mode, frost may form at an external heat exchanger 16 which acts as an evaporator that evaporates the refrigerant in the heat pump cycle 10. In this case, the heat pump cycle 10 may be configured as a refrigerant circuit operating in a defrosting mode to defrost the external heat exchanger 16.

The heat pump cycle 10 includes a compressor 11, an internal condenser 12, the external heat exchanger 16, an internal evaporator 20, a heating fixed throttle 13, a cooling fixed throttle 18, a switching valve 15, and a three-way valve 17. The compressor 11 compresses and discharges the refrigerant. The internal condenser 12 and the internal evaporator 20 are internal heat exchangers that heat and cool the ventilation air. The heating fixed throttle 13 and the cooling fixed throttle 18 are decompression devices that decompress and expand the refrigerant. The switching valve 15 and the three-way valve 17 are refrigerant circuit switching devices that switch a flow path of the refrigerant.

The heat pump cycle 10 forms a vapor compression type sub-critical freezing cycle where the refrigerant pressure at a high pressure side does not exceed the critical pressure of the refrigerant. An HFC-type refrigerant such as R134a may be used. Further, an HFO-type refrigerant such as R1234y may be used. In addition, refrigerant oil may be mixed into the refrigerant to lubricate the moving parts of the compressor 11, such that the refrigerant and the refrigerant oil are circulated together.

The compressor 11 may be disposed within, e.g., an engine compartment of the vehicle, which is outside of a cabin of the vehicle. The compressor 11 intakes the refrigerant in the heat pump cycle 10, then compresses and discharges the refrigerant. The compressor 11 may be an electric compressor including a fixed volume type compression mechanism 11a, which has a fixed discharge volume, and an electric motor 11b that drives the compression mechanism 11a. The compression mechanism 11a may be any of a variety of compression mechanisms, such as a scroll compressor or a rotary vane compressor.

The electric motor 11b may be an AC motor operated by an AC voltage output from an inverter (not illustrated). A rotational speed, that is, a number of revolutions per time unit, of the electric motor 11b is controllable. The inverter of the compressor 11 outputs the AC voltage with a frequency that varies according to a control signal output from the air conditioning control unit 40. Additionally, based on this frequency control, the discharge capacity of the compressor 11 may be adjusted. Accordingly, the electric motor 11b acts as a discharge capacity adjustment unit for the compressor 11.

A discharge outlet of the compressor 11 is connected to a refrigerant inlet of the internal condenser 12. The internal condenser 12 is disposed within a casing 31 of the internal air conditioning unit 30. Here, the casing 31 forms an air flow path for the ventilation air being ventilated into the interior of the vehicle. The internal condenser 12 is a heating heat exchanger that heats the ventilation air by exchanging heat between the ventilation air and the refrigerant flowing inside the internal condenser 12.

A refrigerant outlet of the internal condenser 12 is connected to a refrigerant inlet of the external heat exchanger 16 through the heating fixed throttle 13. The heating fixed throttle 13 is a decompression device that reduces the pressure of the refrigerant flowing out of the internal condenser 12. The heating fixed throttle 13 operates during the heating mode and the dehumidification heating mode. Further, the heating fixed throttle 13 includes a capillary tube and an orifice. In the present embodiment, a bypass path 14 is also provided to guide the refrigerant from the internal condenser 12 to the refrigerant inlet of the external heat exchanger 16, thereby bypassing the heating fixed throttle 13. The switching valve 15 is disposed within the bypass path 14, and may be an electromagnetic valve that selectively opens and shuts the bypass path 14. It should be noted that the present embodiment is not limited to the use of a fixed throttle, as long as a decompression device is provided so that the pressure of the refrigerant is reduced during heating operation modes. For example, an electric expansion valve having a variable throttle that can fully open may be used in place of both the heating fixed throttle 13 and the switching valve 15.

The switching valve 15 acts as a refrigerant circuit switching device that switches the refrigerant circuit based on the operation mode. Accordingly, the switching valve 15 may be an electromagnetic valve that opens and closes based on a control signal output from the air conditioning control unit 40. In the present embodiment, the switching valve 15 is open during the cooling operation and the defrosting operation modes, and the switching valve 15 is closed during the heating operation and the dehumidification heating operation modes.

When the switching valve 15 is closed, the refrigerant passes through the heating fixed throttle 13 and experiences a pressure loss. In contrast, when the switching valve 15 open, the refrigerant passes through the bypass path 14 and experiences a comparatively minimal pressure loss. That is, when the switching valve 15 is open, substantially all of the refrigerant from the internal condenser 12 flows through the bypass path 14 toward the external heat exchanger 16.

The external heat exchanger 16 may be disposed within the engine compartment of the vehicle. A ventilation fan 16a ventilates open air from outside the vehicle cabin. Here, the external heat exchanger 16 exchanges heat from the open air and the refrigerant, received from the internal condenser 12, flowing inside the external heat exchanger 16. The ventilation fan 16a is an electric ventilator having an adjustable rotation speed, or ventilation capacity, which is regulated by a control voltage output from the air conditioning control unit 40.

A refrigerant outlet of the external heat exchanger 16 is connected to the three-way valve 17. The three-way valve 17 is, similar to the above described switching valve 15, a refrigerant circuit switching device that switches the refrigerant circuit based on each operation mode. The three-way valve 17 is an electric three-way valve whose operation is controlled by a control signal output from the air conditioning control unit 40.

During the cooling operation and the dehumidification heating operation modes, the three-way valve 17 switches a refrigerant circuit connecting the refrigerant outlet of the external heat exchanger 16 and the cooling fixed throttle 18. Conversely, during the heating operation and the defrosting operation modes, the three-way valve 17 switches to a refrigerant circuit connecting the refrigerant outlet of the external heat exchanger 16 and a refrigerant inlet of an accumulator 19. The accumulator 19 is disposed at a suction (or intake) port of the compressor 11.

The cooling fixed throttle 18 is substantially similar in construction to the heating fixed throttle 13. A refrigerant outlet of the cooling fixed throttle 18 is connected to a refrigerant inlet of the internal evaporator 20. The internal evaporator 20 is disposed within the casing 31 of the internal air conditioning unit 30. Further, the internal evaporator 20 is disposed upstream of the ventilation air flowing toward the internal condenser 12. Here, the internal condenser 12 is a cooling heat exchanger that cools the ventilation air by exchanging heat between the ventilation air and the refrigeration flowing inside the internal condenser 12.

A refrigerant outlet of the internal evaporator 20 is connected to the refrigerant inlet of the accumulator 19. The accumulator 19 is a gas-liquid separation device that separates gaseous refrigerant and liquid refrigerant flowing therein, and stores surplus refrigerant within the refrigeration cycle. In addition, a gaseous refrigerant outlet of the accumulator 19 is connected to the suction port of the compressor 11.

Next, the internal air conditioning unit 30 will be explained. The internal air conditioning unit 30 may be, for example, disposed within an instrument panel at the front most section of the interior of the vehicle. The internal air conditioning unit 30 is housing within the casing 31, which also houses a ventilator 32, the internal evaporator 20, the internal condenser 12, and an air-mix door 34.

The casing 31 forms the air flow path for the ventilation air being blown into the interior of the vehicle. The casing 31 is preferably formed from a strong material having a degree of flexibility. For example, the casing 31 may be formed from polypropylene resin. An air recirculation switching device 33 is disposed at a position most upstream in the air flow path within the casing 31. The air recirculation switching device 33 selectively permits internal air, from the interior of the vehicle, and open air, from outside the vehicle cabin, to enter the casing 31.

More specifically, the casing 31 includes an internal air inlet that allows internal air to enter, and an open air inlet that allows open air to enter. Here, the air recirculation switching device 33 includes an air recirculation switching door that continuously adjusts an opening area of the internal air inlet and the open air inlet of the casing 31. Accordingly, an air volume ratio between the amount of internal air and the amount of open air can be continuously adjusted. The air recirculation switching door may be driven by an electric actuator 51, which is operated by a control signal output from the air conditioning control unit 40.

The ventilator 32 is disposed downstream in the air flow path from the air recirculation switching device 33. The ventilator 32 ventilators air, which is drawn through the air recirculation switching device 33, into the interior of the vehicle. Here, the ventilator 32 is an electric ventilator including a multi-bladed centrifugal fan being driving by an electric motor. The rotation speed, or ventilation capacity, of the ventilator 32 may be regulated by a control voltage output from the air conditioning control unit 40.

The internal evaporator 20 and the internal condenser 12 are disposed downstream in the air flow path from the ventilator 32. Further, the internal evaporator 20 is disposed upstream in the air flow path from the internal condenser 12.

The air-mix door 34 is disposed downstream in the air flow path from the internal evaporator 20, and upstream in the air flow path from the internal condenser 12. Here, the air-mix door 34 regulates, for the air that passes through the internal evaporator 20, an air volume ratio between the amount of air that passes through the internal condenser 12 and the amount of air that bypasses the internal condenser 12. The air-mix door 34 is driven by an air-mix door electric actuator 52, which is controlled by a control signal output from the air conditioning control unit 40. An air-mixing area 35 is disposed downstream in the air flow path from the internal condenser 12. The air-mixing area 35 mixes warm air, which is heated by heat exchange with the internal condenser 12, and cool air that bypassed the internal condenser 12.

An opening (not illustrated) is formed at a portion of the casing 31 most downstream in the air flow path. The opening is for blowing ventilation air, either having passed through or bypassed the internal condenser 12, into an air conditioning target space in the interior of the vehicle. The opening includes a defrost aperture, a face aperture, and a foot aperture. The defrost aperture blows conditioned air toward an inner side of the vehicle front side window panes. The face aperture blows conditioned air toward the upper half body of passengers in the vehicle. The foot aperture blows conditioned air toward the lower half body of passengers in the vehicle. Downstream in the air flow path from these apertures, various nozzles are connected through respective ducts forming air passageways. These nozzles are formed in the interior of the vehicle and include a center face nozzle, a side face nozzle, a foot nozzle, a defrost nozzle, and the like.

The air-mix door 34, by regulating a ratio of the amount of air that passes through the internal condenser 12, regulates the temperature of the conditioned air mixed in the air-mixing area 35. Accordingly, the temperature of the conditioned air being blown into the interior of the vehicle by the various nozzles is regulated. In other words, the air-mix door 34 is a temperature regulator that regulates the temperature of the conditioned air being ventilated into the interior of the vehicle.

In the internal air conditioning unit 30 of the present embodiment, an electric heater 36 is disposed downstream in the air flow path from the internal condenser 12. The electric heater 36 is a positive temperature coefficient heater that generates heat and heats the ventilation air in accordance with a control signal output from the air conditioning control unit 40. The electric heater 36 acts as an auxiliary heating unit to assist in heating the ventilation air. For example, if the temperature of the conditioned air cannot be adequately heated even when the air-mix door 34 is set to send the maximum amount of ventilation air to the internal condenser 12, electric power is provided to the electric heater 36.

In addition, a defrost door, a face door, and a foot door are disposed upstream in the air flow path from the defrost aperture, the face aperture, and the foot aperture, respectively. The defrost door regulates an opening area of the defrost aperture. The face door regulates an opening area of the face aperture. The foot door regulates an opening area of the foot aperture.

The defrost door, the face door, and the foot door are linked together with a nozzle mode door electric actuator 53 and are driven to rotate, thereby acting as nozzle mode switching devices for switching a nozzle mode. This nozzle mode door electric actuator 53 is also operated by a control signal output from the air conditioning control unit 40.

The nozzle modes switched by the nozzle mode switching devices include a face mode, a bi-level mode, a foot mode, and foot defrost mode. During the face mode, air is blown toward the upper half body of passengers in the vehicle through the center face nozzle and the like. During the bi-level mode, air is blown toward the upper half body and the feet of passengers in the vehicle through both the center face nozzle and the foot nozzle. During the foot mode, the foot nozzle is opened completely and the defrost nozzle is only opened by a small amount, air is blown primarily through the foot nozzle. During the foot defrost mode, the foot nozzle and the defrost nozzle are opened by the same amount, and air is blown through both the foot nozzle and the defrost nozzle.

In addition, a passenger may manually operate a nozzle mode switch provided in an control panel 50 to turn on a defrost mode. During the defrost mode, the defrost nozzle is opened completely and air is blown toward the inner side of the front side window panes.

Next, an electronic control unit according to the present embodiment will be explained. The air conditioning control unit 40 shown in figure 2 includes a microcomputer having a CPU, a ROM, a RAM, and the like, as well as surrounding circuitry for the microcomputer. The air conditioning control unit 40 reads an air conditioning control program recorded in the ROM and, based on the air conditioning control program, performs various kinds of operations and processing to control the devices connected to an output side of the air conditioning control unit 40. The devices connected to the output side of the air conditioning control unit 40 include the ventilator 32, the compressor 11, the ventilation fan 16a, the switching valve 15, the three-way valve 17, the electric actuator 51 for the air recirculation switching door, the air-mix door electric actuator 52, the nozzle mode door electric actuator 53, and the like.

Further, detection signals from various kinds of sensors are input into an input side of the air conditioning control unit 40. These sensors include an internal air temperature sensor 41, an open air temperature sensor 42, a solar radiation sensor 43, a discharge temperature sensor 44, a discharge pressure sensor 45, an evaporator temperature sensor 46, an outflow temperature sensor 47, a blowing temperature sensor 48, and the like.

The internal air temperature sensor 41 detects a vehicle interior temperature $Tr$. The open air temperature sensor 42 detects an open air temperature $Tam$. The solar radiation sensor 43 detects a solar radiation amount $Tsr$ in the interior of the vehicle. The discharge temperature sensor 44 detects a discharge refrigerant temperature $Td$ of the compressor 11. The discharge pressure sensor 45 detects a discharge refrigerant pressure $Pd$ of the compressor 11, which is on a high refrigerant pressure side of the heat cycle. The evaporator temperature sensor 46 detects an evaporator temperature $TE$ as the temperature of the air blown out of the internal evaporator 20. The blowing temperature sensor 48 detects the temperature of the air immediately after the internal condenser 12 and the electric heater 36 which is then blown into the interior of the vehicle.

In the present embodiment, as shown in figure 1, the discharge temperature sensor 44 is disposed downstream in the refrigerant flow from the compressor 11, and upstream in the refrigerant flow from the internal condenser 12. The discharge pressure sensor 45 is disposed downstream in the refrigerant flow from the internal condenser 12, and upstream in the refrigerant flow from the heating fixed throttle 13. Further, the evaporator temperature sensor 46 may be, for example, a fin temperature sensor installed on an outer fin of the internal evaporator 20.

The outflow temperature sensor 47 detects the temperature of the refrigerant at the outlet of the external heat exchanger 16. During the heating operation mode, the temperature of the refrigerant at the outlet of the external heat exchanger 16 is detected as an intake refrigerant temperature $Ts$, which is the temperature of the refrigerant flowing out of the external heat exchanger 16 and drawn by the compressor 11. In the present embodiment, this intake refrigerant temperature $Ts$ may be referred to as an external heat exchanger outlet refrigerant temperature.

Signals from sensors other than the above described sensors may also be input to the air conditioning control unit 40. These other sensors may include a suction pressure sensor, a humidity sensor, a window pane vicinity temperature sensor, a window pane surface temperature sensor, and the like. The suction pressure sensor detects a suction side refrigerant pressure $P_s$ of the compressor 11 on a low refrigerant pressure side of the heat cycle. The humidity sensor detects a relative humidity level between the interior of the vehicle and a vicinity of a window pane inside the vehicle. The window pane vicinity temperature sensor detects a temperature of the air inside the vehicle near the window pane. The window pane surface temperature sensor detects a surface temperature of the window pane.

Various air conditioning operation switches are provided at the control panel 50 which neighbors the instrument panel at the front section of the interior of the vehicle. Operation signals from these operation switches are input to the input side of air conditioning control unit 40. The various air conditioning operation switches may include an activation switch for the vehicle air conditioning unit 1, a compressor activation switch that selectively starts and stops the compressor 11, and an operation mode selector switch. Further, a nozzle mode selector switch, an air volume configuration switch for the ventilator 32, a vehicle interior temperature configuration switch, an economy mode switch that outputs an instruction to prioritize power savings in the heat pump cycle 10, and the like may also be provided.

Next, the operation of the vehicle air conditioning unit 1 according to the present embodiment will be explained. The air conditioning control unit 40 determines control target values for various devices based on an air conditioning heat load. For example, a blast volume of the ventilator 32, a suction port mode, a nozzle mode, an opening angle of the air-mix door 34, an operation mode of the heat pump cycle 10, and the like may be determined. Then, based on this determination, control signals are output to the various devices to operate the various devices.

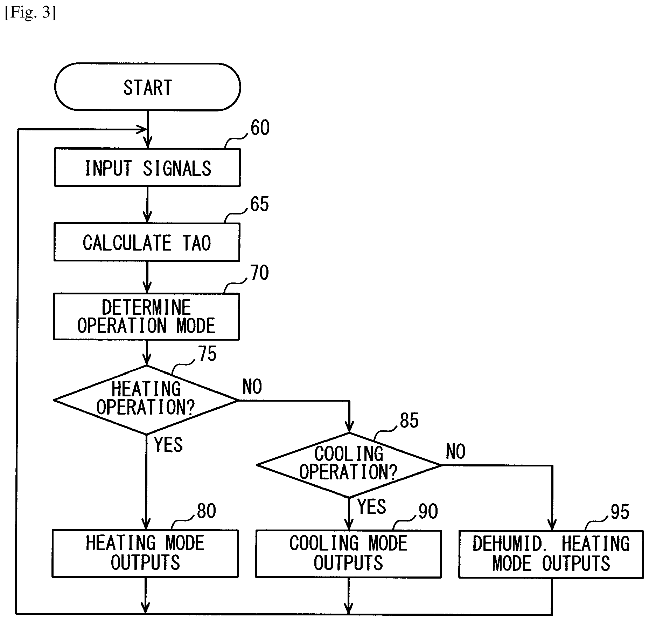

Figure 3 shows an air conditioning control process by the air conditioning control unit 40. First, at step 60, the air conditioning control unit 40 reads vehicle environmental condition signals for air conditioning control, i.e., the detection signals from the above described sensor groups and the operation signals from the control panel 50. Then, the air conditioning control unit 40 proceeds to step 65.

At step 65, a target air temperature TAO for the conditioned air blown into the interior of the vehicle is calculated. The target air temperature TAO is calculated based on the air conditioning heat load, i.e., a set temperature for the interior of the vehicle and vehicle environmental conditions such as the vehicle interior temperature. For example, the target air temperature TAO may be calculated by equation (1) below:

$$TAO = Kset*Tset - Kr*Tr - Kam*Tam - Ksr*Tsr + C \ (1)$$

Here, Tset is a vehicle interior temperature set by the vehicle interior temperature configuration switch. Tr is a vehicle interior temperature detected by the internal air temperature sensor 41. Tam is an open air temperature detected by the open air temperature sensor 42. Tsr is a solar radiation amount detected by the solar radiation sensor 43. Kset, Kr, Kam, and Ksr are gain coefficients, and C is a compensation constant.

After calculating the target air temperature TAO at step 65, the operation mode of the heat pump cycle 10 is determined at step 70. At step 70, the air conditioning operation mode of the heat pump cycle 10 is determined based on the target air temperature TAO, an intake temperature of the internal and external air outlets, a relative humidity and a temperature of the air inside the vehicle near the window pane, a surface temperature of the window pane, and the like. At step 70, one of the cooling operation, dehumidification heating operation, and heating operation modes is determined.

Further, it is contemplated that one of the heating operation and cooling operation modes is selected as the operation mode, without performing the dehumidification heating operation. In this case, a portion of the sensors for detecting the vehicle environmental conditions may be omitted, and the control program may be simplified.

After determining the operation mode at step 70, a determination is made at step 75 as to whether the operation mode determined at step 70 is the heating operation mode or not. Here, if the determined operation mode is the heating operation mode, the process (control process) proceeds to step 80. Otherwise, if the determined operation mode is the cooling operation mode or the dehumidification heating operation mode (i.e., "NO"), the process proceeds to step 85. At step 85, a determination is made as to whether the operation mode determined at step 70 is the cooling operation mode or not. Here, if the determined operation mode is the cooling operation mode, the process proceeds to step 90. Otherwise, if the determined operation mode is the dehumidification heating operation mode, the process proceeds to step 95.

At step 80, control signals for executing the heating operation is output with respect to various actuators and the like. Specifically, a control signal is output for the switching valve 15 to close. Further, a control signal is output for the three-way valve 17 to connect the refrigerant outlet of the external heat exchanger 16 with the refrigerant inlet of the accumulator 19, and close the path to the cooling fixed throttle 18. Further, a control signal is output for the air-mix door electric actuator 52 to fully open the path to the internal condenser 12. Further, based on the target air temperature TAO, control target values are determined and output for various devices such as the rotational speed of the compressor 11, the opening angle of the air-mix door 34, the blast volume of the ventilator 32, the blast volume of the ventilation fan 16a, and the like.

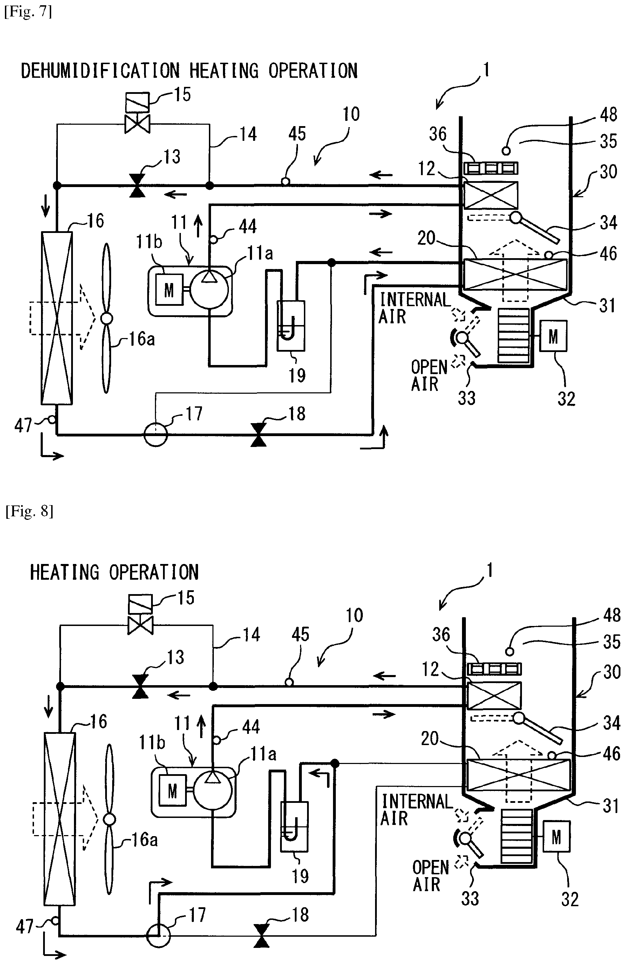

When step 80 is performed, the vehicle air conditioning unit 1 is in the heating operation mode configuration as shown in figure 8. The air-mix door 34 may be positioned at a heating position where all of the ventilation air passing through the internal evaporator 20 is directed toward the internal condenser 12.

During the heating operation mode, a refrigerant circuit is formed to circulate the refrigerant as indicated by the arrows in figure 8. In this circuit of the heat pump cycle 10, the refrigerant is circulated, in order, through the compressor 11, the internal condenser 12, the heating fixed throttle 13, the external heat exchanger 16, the accumulator 19, and back to the compressor 11. The heating fixed throttle 13 corresponds to the decompression device of the present embodiment.

The refrigerant is compressed by the compressor 11 and then, at the internal condenser 12, dissipates heat into the ventilation air being ventilated by the ventilator 32. Accordingly, the ventilation air passing through the internal condenser 12 is heated, and the interior of the vehicle is heated. Further, the refrigerant is discharged from the internal condenser 12, decompressed by the heating fixed throttle 13, and delivered to the external heat exchanger 16.

At the external heat exchanger 16, the refrigerant absorbs heat from open air, which is outside of the vehicle cabin, being ventilated by the ventilation fan 16a. As a result, the refrigerant evaporates. The refrigerant discharged by the external heat exchanger 16 is delivered to the accumulator 19 through the three-way valve 17. The accumulator 19 performs liquid-gas separation on the refrigerant. Then, the compressor 11 intakes and once again compresses the gas phase refrigerant.

Accordingly, the heating operation is a heat cycle where the internal condenser 12 acts as a radiator that radiates heat from the refrigerant, and the external heat exchanger 16 acts as an evaporator that evaporates the refrigerant.

At step 90, control signals for executing the cooling operation is output with respect to the various actuators and the like. Specifically, a control signal is output for the switching valve 15 to open. Further, a control signal is output for the three-way valve 17 to connect the refrigerant outlet of the external heat exchanger 16 with the refrigerant inlet of the cooling fixed throttle 18, and close the path to the accumulator 19. Further, a control signal is output for the air-mix door electric actuator 52 to fully open the path bypassing the internal condenser 12. Further, based on the target air temperature TAO, control target values are determined and output for various devices such as the rotational speed of the compressor 11, the opening angle of the air-mix door 34, the blast volume of the ventilator 32, the blast volume of the ventilation fan 16a, and the like.

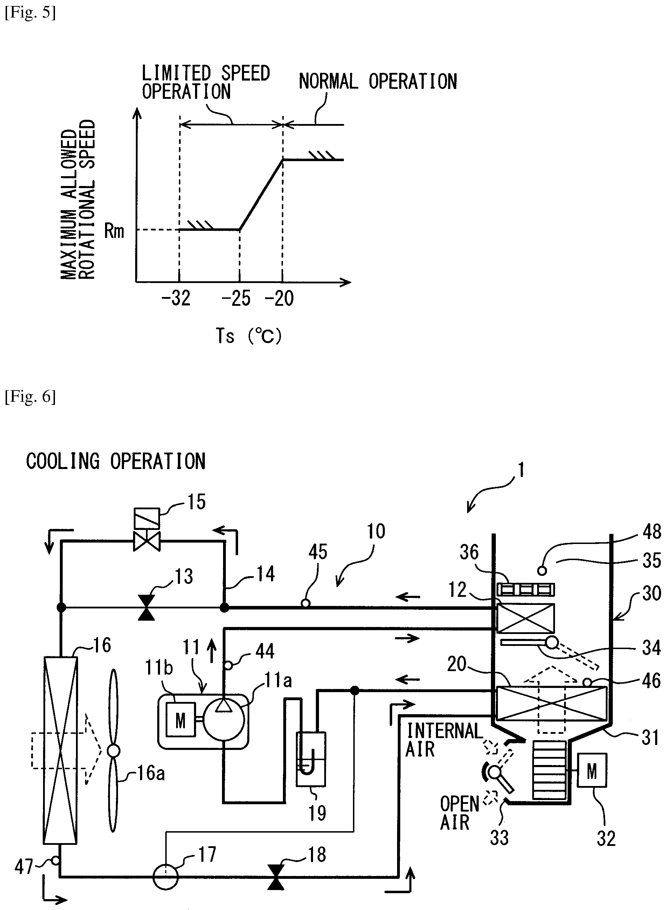

When step 90 is performed, the vehicle air conditioning unit 1 is in the cooling operation mode configuration as shown in figure 6. The air-mix door 34 may be positioned at a cooling position where all of the ventilation air passing through the internal evaporator 20 is directed to bypass the internal condenser 12.

During the cooling operation mode, a refrigerant circuit is formed to circulate the refrigerant as indicated by the arrows in figure 6. In this circuit of the heat pump cycle 10, the refrigerant is circulated, in order, through the compressor 11, the internal condenser 12, the external heat exchanger 16, the cooling fixed throttle 18, the internal evaporator 20, the accumulator 19, and back to the compressor 11.

The high-pressure high-temperature refrigerant compressed by the compressor 11 is delivered to the internal condenser 12. At this time, the air-mix door 34 is blocking the path to the internal condenser 12, and as a result, heat exchange does not occur between the refrigerant and the ventilation air at the internal condenser 12. The refrigerant is discharged from the internal condenser 12 and delivered to the external heat exchanger 16 through the bypass path 14. At the external heat exchanger 16, the refrigerant radiates heat by exchanging heat with the open air ventilated by the ventilation fan 16a.

The refrigerant is then discharged from the external heat exchanger 16 and delivered to the cooling fixed throttle 18 through the three-way valve 17. At the cooling fixed throttle 18, the refrigerant is decompressed and expanded. The low-pressure refrigerant, after being decompressed by the cooling fixed throttle 18, is then delivered to the internal evaporator 20, where the refrigerant evaporates by absorbing heat from the ventilation air being ventilated by the ventilator 32. Due to this heat absorption by the refrigerant, the ventilation air passing through the internal evaporator 20 is cooled, and the interior of the vehicle is cooled. The refrigerant is then discharged from the internal evaporator 20 and delivered to the accumulator 19. The accumulator 19 performs liquid-gas separation on the refrigerant. Then, the compressor 11 intakes and once again compresses the gas phase refrigerant.

Accordingly, the cooling operation is a heat cycle where the external heat exchanger 16 acts as a radiator, and the internal evaporator 20 acts as an evaporator.

During the cooling mode operation, the opening angle of the air-mix door 34 may be adjusted to heat, with the internal condenser 12, a portion of the ventilation air being cooled by the internal evaporator 20. Accordingly, it is possible to adjust the temperature of the ventilation air being blown into the internal of the vehicle through the nozzles. By heating, with the internal condenser 12, a portion of the ventilation air being cooled by the internal evaporator 20, the ventilation air temperature may be adjusted to be closer to the target air temperature TAO. As a result, the interior of the vehicle may be more suitably cooled. At this time, a heat cycle is configured where the internal condenser 12 and the external heat exchanger 16 act as radiators, and the internal evaporator 20 acts as an evaporator.

At step 95, control signals for executing the dehumidification heating operation is output with respect to the various actuators and the like. Specifically, a control signal is output for the switching valve 15 to close. Further, a control signal is output for the three-way valve 17 to connect the refrigerant outlet of the external heat exchanger 16 with the refrigerant inlet of the cooling fixed throttle 18, and close the path to the accumulator 19. Further, a control signal is output for the air-mix door electric actuator 52 to fully open the path to the internal condenser 12. Further, based on the target air temperature TAO, control target values are determined and output for various devices such as the rotational speed of the compressor 11, the opening angle of the air-mix door 34, the blast volume of the ventilator 32, the blast volume of the ventilation fan 16a, and the like.

When step 95 is performed, the vehicle air conditioning unit 1 is in the dehumidification heating operation mode configuration as shown in figure 7. The air-mix door 34 may be positioned at a heating position where all of the ventilation air passing through the internal evaporator 20 is directed toward the internal condenser 12.

During the dehumidification heating operation mode, a refrigerant circuit is formed to circulate the refrigerant as indicated by the arrows in figure 7. In this circuit of the heat pump cycle 10, the refrigerant is circulated, in order, through the compressor 11, the internal condenser 12, the heating fixed throttle 13, the external heat exchanger 16, the cooling fixed throttle 18, the internal evaporator 20, the accumulator 19, and back to the compressor 11.

The refrigerant is compressed by the compressor 11 and then, at the internal condenser 12, dissipates heat into the ventilation air being ventilated by the ventilator 32. Accordingly, the ventilation air passing through the internal condenser 12 is heated. Further, the refrigerant is discharged from the internal condenser 12, decompressed by the heating fixed throttle 13, and delivered to the external heat exchanger 16.

At the external heat exchanger 16, the refrigerant exchanges heat with open air, which is outside of the vehicle cabin, being ventilated by the ventilation fan 16a. The refrigerant is then discharged from the external heat exchanger 16 and delivered to the cooling fixed throttle 18 through the three-way valve 17. At the cooling fixed throttle 18, the refrigerant is decompressed and expanded. The low-pressure refrigerant, after being decompressed by the cooling fixed throttle 18, is then delivered to the internal evaporator 20, where the refrigerant evaporates by absorbing heat from the ventilation air being ventilated by the ventilator 32. Due to this heat absorption by the refrigerant, the ventilation air passing through the internal evaporator 20 is cooled.

As such, the ventilation air is cooled and dehumidified by the internal evaporator 20. Then, the dehumidified ventilation air is heated at the internal condenser 12. Accordingly, the interior of the vehicle is dehumidified and heated. The refrigerant discharged from the internal evaporator 20 is delivered to the accumulator 19. The accumulator 19 performs liquid-gas separation on the refrigerant. Then, the compressor 11 intakes and once again compresses the gas phase refrigerant.

Accordingly, the dehumidification heating operation is a heat cycle where the internal condenser 12 acts as a radiator, and the internal evaporator 20 acts as an evaporator. At this time, depending on the open air temperature, the external heat exchanger 16 acts as one of a radiator, an evaporator, and simply a refrigerant path.

During the dehumidification heating mode operation, the opening angle of the air-mix door 34 may be adjusted, so that a portion of the ventilation air being cooled by the internal evaporator 20 is directed to bypass the internal condenser 12. Accordingly, it is possible to adjust the temperature of the ventilation air being blown into the interior of the vehicle through the nozzles. By directing a portion of the ventilation air being cooled by the internal evaporator 20 to bypass the internal condenser 12, the ventilation air temperature may be adjusted to be closer to the target air temperature TAO. As a result, the interior of the vehicle may be more suitably cooled.

In addition, if a variable throttle is used as a heating throttle and a cooling throttle, the air conditioning control unit 40 may adjust an opening angle of the heating throttle and the cooling throttle based on the target air temperature TAO. As a result, the temperature of the ventilation air being blown into the interior of the vehicle may be adjusted. At this time, the air-mix door 34 may be positioned at a heating position where all of the ventilation air passing through the internal evaporator 20 is directed toward the internal condenser 12.

Next, the control process for the compressor 11, when the air conditioning control unit 40 is performing the heating operation shown in step 80 of figure 3, will be explained.

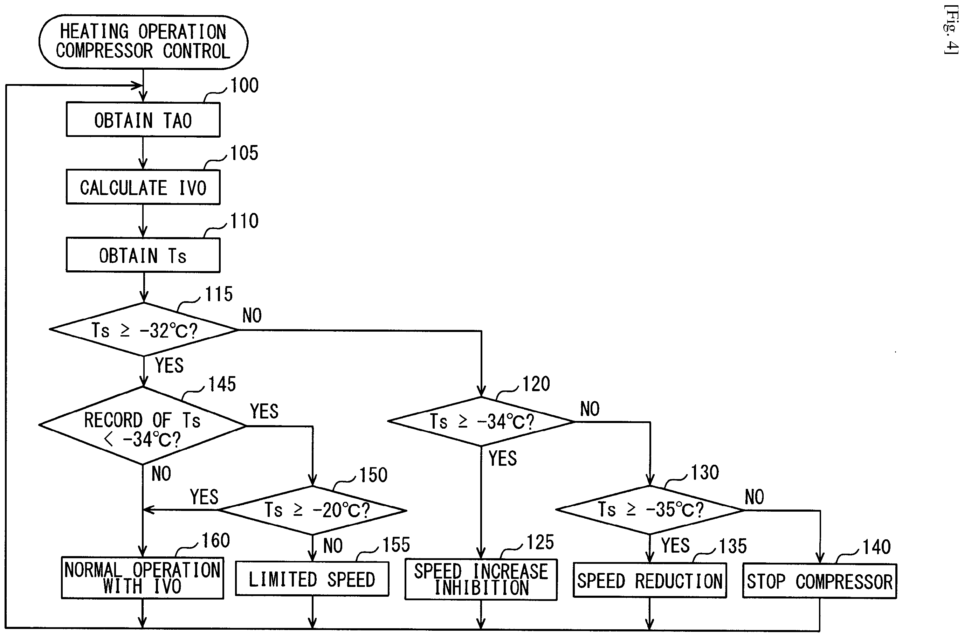

As shown in figure 4, first, at step 100, the air conditioning control unit 40 acquires the target air temperature TAO. Specifically, at step 100, the target air temperature TAO calculated at step 65 of figure 3 is used. After acquiring the target air temperature TAO at step 100, the process proceeds to step 105, where a target rotational speed IVO of the compressor 11 is calculated based on the target air temperature TAO.

After performing step 105, at step 110, the intake refrigerant temperature Ts is acquired based on a signal from the outflow temperature sensor 47. After performing step 110, the process proceeds to step 115, where a determination is made as to whether the intake refrigerant temperature Ts acquired in step 110 is at least -32°C. At step 115, if the intake refrigerant temperature Ts is determined to be at least -32°C, the process proceeds to step 145. Otherwise, at step 115, if the intake refrigerant temperature Ts is determined to be less than -32°C, the process proceeds to step 120.

At step 120, a determination is made as to whether the intake refrigerant temperature Ts is at least -34°C. At step 120, if the intake refrigerant temperature Ts is determined to be at least -34°C, the process proceeds to step 125. At step 125, a speed increase inhibition operation is performed, where the rotational speed of the compressor 11 inhibited from increasing. Specifically, during the speed increase inhibition operation, even if a current target rotational speed IVO is greater than a rotational speed of the compressor 11 from a previously outputted control signal, the target rotational speed IVO is not used, and the rotational speed of the compressor 11 from the previously outputted control signal is used. After performing step 125, the process returns to step 100.

Conversely, at step 120, if the intake refrigerant temperature Ts is determined to be less than -34°C, the process proceeds to step 130. At step 130, a determination is made as to whether the intake refrigerant temperature Ts is at least -35°C. At step 130, if the intake refrigerant temperature Ts is determined to be at least -35°C, the process proceeds to step 135.

At step 135, a speed reduction operation is performed, where the rotational speed of the compressor 11 is reduced. Specifically, during the speed reduction operation, regardless of the current target rotational speed IVO, the rotational speed of the compressor 11 from a previously outputted control signal is reduced by a predetermined rotational speed, and this reduced rotational speed is used. After performing step 135, the process returns to step 100.

At step 130, if the intake refrigerant temperature Ts is determined to be less than - 35°C, the process proceeds to step 140. At step 140, the compressor 11 is controlled to stop. After performing step 140, the process returns to step 100.

At step 115, if the intake refrigerant temperature Ts is determined to be at least - 32°C, the process proceeds to step 145, where a determination is made as to whether the intake refrigerant temperature Ts has a previous record of being less than -34°C. Specifically, at step 145, it is determined whether the intake refrigerant temperature Ts was previously less than -34°C and subsequently rose to be at least -32°C.

At step 145, if it is determined that the intake refrigerant temperature Ts has a previous record of being less than -34°C, the process proceeds to step 150. At step 150, a determination is made as to whether the intake refrigerant temperature Ts is at least - 20°C. At step 150, if the intake refrigerant temperature Ts is determined to be less than -20°C, the process proceeds to step 155. At step 155, a limited speed operation is performed, where the rotational speed of the compressor 11 is limited to a predetermined maximum allowed rotational speed.

At step 150, if the intake refrigerant temperature Ts is determined to be at least - 20°C, the process proceeds to step 160. In addition, at step 145, if it is determined that the intake refrigerant temperature Ts does not have a previous record of being less than -34°C, the process proceeds to step 160. At step 160, a normal operation of the compressor 11 is performed, where the rotational speed of the compressor 11 is adjusted toward the target rotational speed IVO calculated in step 105. When step 160 is performed, if there is a large difference between the actual rotational speed and the target rotational speed IVO, the rotational speed is adjusted by a predetermined amount each time step 160 is performed. Accordingly, step 160 is performed multiple times in order to match the actual rotational speed with the target rotational speed IVO.

As a result of the determinations at step 145 and step 150, when the intake refrigerant temperature Ts begins from a state of less than -34°C, as long as the intake refrigerant temperature Ts has not reached at least -20°C, and the current intake refrigerant temperature Ts is at least -32°C, the limited speed operation is performed. Under different circumstances, when the current intake refrigerant temperature Ts is at least -32°C, the normal operation is performed.

In other words, once the speed reduction operation has finished and the intake refrigerant temperature Ts rises to at least -32°C, and while the intake refrigerant temperature Ts has not reached at least -20°C even once since performing the most recent speed reduction operation, the limited speed operation is performed instead of the normal operation.

During the limited speed operation of step 155, the maximum allowed rotational speed is limited to a predetermined speed as illustrated in, for example, figure 5. In this example, the configuration pattern of the maximum allowed rotational speed changes at predetermined temperatures in the temperature range for the limited speed operation. As shown in figure 5, the maximum allowed rotational speed may be limited to a predetermined value, Rm, from -32°C to -25°C. Further, from -25°C to -20°C, the maximum allowed rotational speed may a predetermined value that gradually increases, as the intake refrigerant temperature Ts increases, from Rm to a normal operation maximum allowed rotational speed. Rm may be a rotational speed of 3000 rotations per minute. The normal operation maximum allowed rotational speed may be a rotational speed of 7000 rotations per minute.

In the present embodiment, step 160 provides a normal operation unit for performing the normal operation. The normal operation is an operation where, when the intake refrigerant temperature Ts is at least a first predetermined temperature, the compressor 11 is operated with a target rotational speed IVO based on the target air temperature (target heating temperature) TAO of the heating target fluid. The intake refrigerant temperature Ts is a temperature of the refrigerant flowing out of the external heat exchanger 16 and drawn by the compressor 11.

Step 135 provides a speed reduction operation unit for performing the speed reduction operation. The speed reduction operation is an operation where, during at least a portion of the temperature range where the intake refrigerant temperature Ts is less than the first predetermined temperature, the target rotational speed IVO, which is determined based on the target air temperature (target heating temperature) TAO, is not used. Instead, the rotational speed of the compressor 11 is reduced below a target rotational speed of when the intake refrigerant temperature Ts fell to the first predetermined temperature.

Step 155 provides a limited speed operation unit that performs the limited speed operation. The limited speed operation is an operation where, when the speed reduction operation was previously performed and the intake refrigerant temperature Ts rises to at least the first predetermined temperature Ts, the compressor 11 is limited to be driven at a rotational speed that is lower than a rotational speed during normal control. The rotational speed of the compressor 11 is limited in this manner until the intake refrigerant temperature Ts reaches a second predetermined temperature higher than the first predetermined temperature. For example, a maximum allowed rotational speed of the compressor 11 may be set to a predetermined speed lower than the maximum allowed rotational speed of the compressor 11 during the normal operation. Further, the limited speed operation unit allows a return to the normal operation when, during the limited speed operation, the intake refrigerant temperature Ts rises to at least the second predetermined temperature.

The air conditioning control unit 40 includes a speed increase inhibition operation unit, which is provided by step 125. The speed increase inhibition operation unit performs a speed increase inhibition operation where the rotational speed of the compressor 11 is inhibited from increasing. Here, the speed increase inhibition operation unit performs the speed increase inhibition operation during a temperature range where the intake refrigerant temperature Ts is below the first predetermined temperature and above the intake refrigerant temperature Ts of when the speed reduction operation is performed. In this case, the limited speed operation unit is configured to perform the limited speed operation when, while the speed increase inhibition operation is being performed and the speed reduction operation was previously performed, the intake refrigerant temperature Ts rises to at least the first predetermined temperature. Further, the limited speed operation unit is configured to not perform the limited speed operation when, while the speed increase inhibition operation is being performed and the speed reduction operation was not previously performed, the intake refrigerant temperature Ts rises to at least the first predetermined temperature.

The following effects may be observed from the above described configuration and heating operation.

When the intake refrigerant temperature Ts is at least -32°C, the air conditioning control unit 40 performs the normal operation where the compressor 11 is driven at the target rotational speed IVO which is determined based on the target air temperature TAO. The target air temperature TAO is a target heating temperature for the ventilation air, which is a heating target fluid of the internal condenser 12.

Further, during the normal operation, when the intake refrigerant temperature Ts falls to below -32°C, the target rotational speed IVO determined based on the target air temperature TAO is not used. Instead, a speed control operation, which includes the speed reduction operation, is performed to control the rotational speed of the compressor 11. In the present embodiment, the speed control operation may be the speed increase inhibition operation, the speed reduction operation, or an operation to stop the compressor 11. Further, the speed reduction operation is an operation where the rotational speed of the compressor 11 is reduced from a target rotational speed IVO of when the intake refrigerant temperature Ts reached -32°C. Here, -32°C corresponds to the first predetermined temperature of the present embodiment. The first predetermined temperature is a threshold value that switches the control operation between the normal operation and the speed control operation.

Additionally, when the speed control operation is being performed and the speed reduction operation was previously performed, if the intake refrigerant temperature Ts rises to at least the first predetermined temperature, and until the intake refrigerant temperature Ts reaches -20°C which is higher than the first predetermined temperature, the limited speed operation is performed. The limited speed operation is an operation for limiting the maximum allowed rotational speed of the compressor 11 to a predetermined rotational speed that is lower than that of the normal operation. Further, when the limited speed operation is being performed and the intake refrigerant temperature Ts rises to at least -20°C, the control process returns to driving the compressor 11 with the normal operation. Here, -20°C corresponds to the second predetermined temperature, which is higher than the first predetermined temperature, of the present embodiment.

Accordingly, when the speed control operation is being performed and the speed reduction operation was previously performed, even if the intake refrigerant temperature Ts reaches at least the first predetermined temperature, and until the intake refrigerant temperature Ts reaches the second predetermined temperature, the limited speed operation is performed to limit the maximum allowed rotational speed of the compressor 11 to a predetermine speed. This predetermined speed is set to be lower than a maximum allowed rotational speed of the normal operation.

For this reason, when the speed control operation is called off and the control process tries to return to the normal operation, the rotational speed of the compressor 11, which was reduced by the speed reduction operation, is limited by the limited speed operation. Specifically, the limited speed operation limits the rise of the rotational speed of the compressor 11 until the intake refrigerant temperature Ts reaches the second predetermined temperature, thereby restraining the rotational speed of the compressor 11 from rapidly returning to the target rotational speed IVO.

If the speed reduction operation is performed as part of the speed control operation, then the limited speed operation must be performed before the control process may return to the normal operation. Accordingly, a scenario of switching to the normal operation as soon as the intake refrigerant temperature Ts reaches at least the first predetermined temperature, and then immediately returning to the speed control operation from the normal operation, may be prevented. Further, when the control process returns to the normal operation after having performed the speed control operation and then the limited speed operation, the intake refrigerant temperature Ts has reached at least the second predetermined temperature, and therefore the control process will not immediately return to the speed control operation from the normal operation. In this manner, hunting oscillation in the rotational speed of the compressor 11 due to low open air temperature may be prevented. Here, performing the speed reduction operation as part of the speed control operation refers to performing only the speed reduction operation, and refers to performing the speed reduction operation immediately followed by the speed increase inhibition operation.

Furthermore, the speed control operation of the compressor 11 is for the purpose of protecting the various devices that form the heat pump cycle 10. Due to the speed control operation, degradation in sealing properties of the refrigerant path between the external heat exchanger 16 and the compressor 11 when the intake refrigerant temperature Ts is low, and other such malfunctions, may be suppressed. Further, damage to the various devices forming the heat cycle due to a rise in the discharge refrigerant temperature Td may also be suppressed.

Further, the above described speed control operation includes the speed increase inhibition operation. The speed increase inhibition operation does not allow the rotational speed of the compressor 11 to increase when the intake refrigerant temperature Ts is within a sub-range of the temperature range below the first predetermined temperature, the sub-range being higher than the intake refrigerant temperature Ts of when the speed reduction operation is performed. Therefore, while the speed reduction operation is being performed, as the intake refrigerant temperature Ts rises, the air conditioner control unit 40 switches the control process to the speed increase inhibition operation. Thereafter, when the intake refrigerant temperature Ts rises to reach the first predetermined temperature, the control process switches to the limited speed operation. The limited speed operation is performed until the intake refrigerant temperature Ts rises to the second predetermined temperature, which is higher than the first predetermined temperature.

As a result, when the speed increase inhibition operation is being performed immediately following the speed reduction operation, even if the intake refrigerant temperature Ts rises to at least the first predetermined temperature, the limited speed operation is performed. Accordingly, when the speed reduction operation is called off and the control process tries to return to the normal operation, the rotational speed of the compressor 11, which was reduced by the speed reduction operation, is limited by the limited speed operation. Specifically, the limited speed operation limits the rise of the rotational speed of the compressor 11 until the intake refrigerant temperature Ts reaches the second predetermined temperature, thereby restraining the rotational speed of the compressor 11 from rapidly returning to the target rotational speed IVO. As a result, even if the speed control operation includes both the speed reduction operation as well as the speed increase inhibition operation, hunting oscillation in the rotational speed of the compressor 11 due to low open air temperature may be prevented.

Further, the air conditioning control unit 40 may configure the predetermined speed, which is the maximum allowed rotational speed during the limited speed operation, to increase as the intake refrigerant temperature Ts rises. In this manner, when the intake refrigerant temperature Ts reaches the second predetermined temperature and the speed control operation is called off, the rotational speed of the compressor 11 may be suppressed from drastically increasing. Accordingly, sudden changes in the rotational speed of the compressor 11 may be suppressed.

Further, the air conditioning control unit 40 may configure the predetermined speed, which is the maximum allowed rotational speed during the limited speed operation, to gradually increase as the intake refrigerant temperature Ts rises. In this manner, when the limited speed operation is being performed and the intake refrigerant temperature Ts rises, sudden changes in the rotational speed of the compressor 11 may be suppressed.

Further, in the current embodiment, the heating target fluid is the conditioned air blown into the interior of the vehicle. Accordingly, when the heating operation is performed and the internal condenser 12 heats the conditioned air, even if the open air temperature is low, hunting oscillation in the rotational speed of the compressor 11 may be prevented. If hunting oscillation occurs in the compressor 11 of the vehicle air conditioning unit 1, noises associated with the hunting oscillation may reach the passengers and cause discomfort to the passengers. The present embodiment may suppress such discomfort.

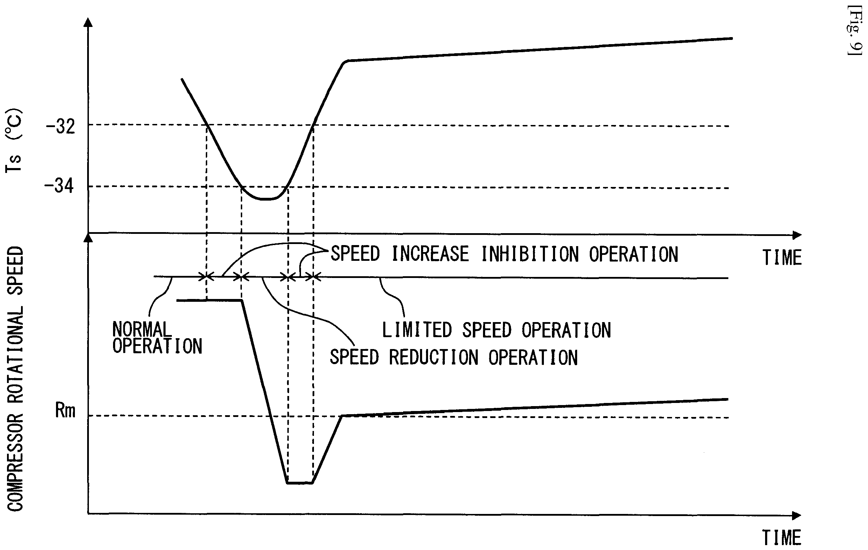

In the vehicle air conditioning unit 1 according to the present embodiment, when the open air temperature is extremely low, the compressor 11 may operate as shown in figure 9. As shown in the upper portion of figure 9, the intake refrigerant temperature Ts steadily decreases to fall under -32°C. In this case, as shown in the lower portion of figure 9, the compressor 11 switches from the normal operation to the speed increase inhibition operation. When the intake refrigerant temperature Ts further decreases to fall under -34°C, the compressor 11 switches to the speed reduction operation. During the speed reduction operation, the rotational speed of the compressor 11 is reduced by a predetermined rotational speed each time step 135 of figure 4 is performed. Accordingly, as shown in figure 9, the rotational speed of the compressor 11 steadily decreases.

As the speed reduction operation is performed, the intake refrigerant temperature Ts shifts from a downward slope and begins to rise, as shown. When the intake refrigerant temperature Ts rises above -34°C, the compressor 11 switches to the speed increase inhibition operation. Then, when the intake refrigerant temperature Ts rises above -32°C, the compressor 11 switches to the limited speed operation. During the limited speed operation, the maximum allowed rotational speed of the compressor 11 is set to a predetermined speed lower than that the maximum allowed rotational speed of the normal operation. Further, during the limited speed operation, while below the maximum allowed rotational speed, the rotational speed of the compressor 11 is controlled to increase toward the target rotational speed IVO. Specifically, during the limited speed operation, the rotational speed of the compressor 11 increases by a predetermined rotational speed each time step 155 of figure 4 is performed. However, this increase is only performed while below the maximum allowed rotational speed. Accordingly, as shown in figure 9, once the rotational speed of the compressor 11 reaches the maximum allowed rotational speed, which is set lower than that of the normal operation, the rotational speed of the compresses gradually rises from thereon.

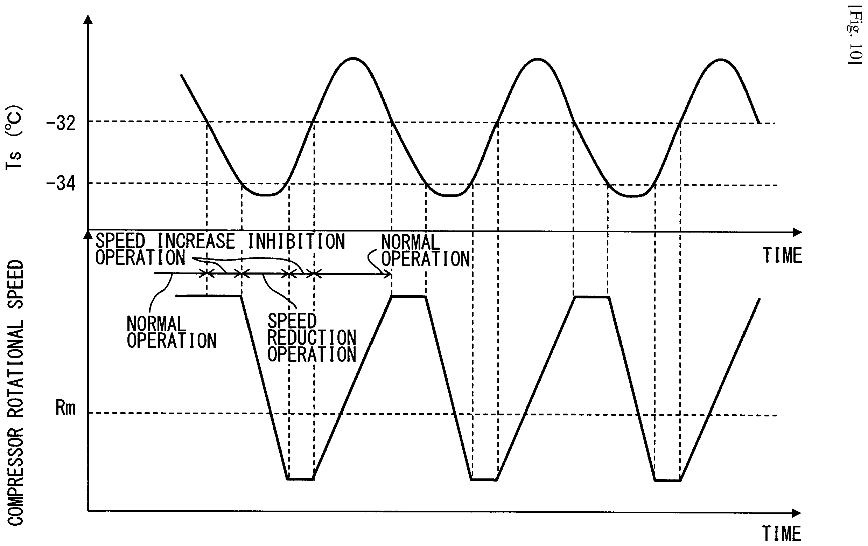

According to a comparative example, the compressor 11 may operate as shown in, e.g., figure 10. In the comparative example, the air conditioning control unit 40 controls the compressor 11 in the heating mode operation while following the flow chart of figure 4, except without steps 145, 150, and 155. As shown in figure 10, in the comparative example, the limited speed operation is not performed when returning from the speed control operation, which includes the speed reduction operation and the speed increase inhibition operation, to the normal operation. Accordingly, when returning from the speed control operation to the normal operation, the rotational speed of the compressor 11 rapidly approaches the target rotational speed IVO, and hunting oscillation occurs in the rotational speed of the compressor 11. According to the present embodiment, the hunting oscillation of the comparative example may be prevented.

(Second Embodiment)

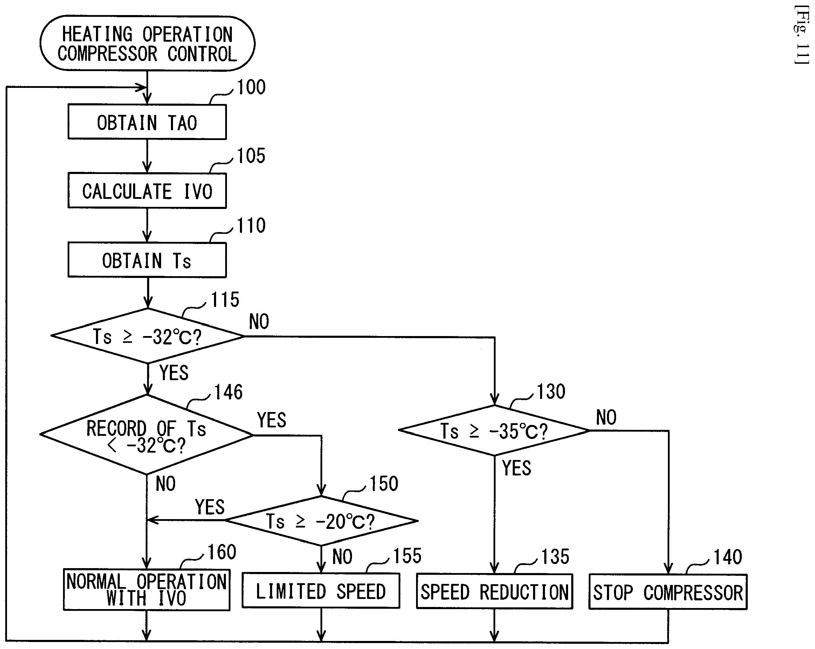

Next, a second embodiment will be explained with reference to figure 11.

The second embodiment is different from the first embodiment in that the speed increase inhibition operation is not performed. Further, for portions which are the same as the first embodiment, the same reference numbers are used, and explanations thereof are omitted for brevity. Specifically, elements having the same reference numbers as the figures of the first embodiment, as well as other elements not explained in the second embodiment, are the same as those of the first embodiment, and have the same effects as the first embodiment.

In the present embodiment, a vehicle air conditioning unit having a heat pump cycle may, e.g., have the same configuration as that of the first embodiment.

Figure 11 shows a process (control process) of an air conditioning control unit of the present embodiment. At step 115, if it is determined that the intake refrigerant temperature Ts is at least -32°C, the process proceeds to step 146. Otherwise, at step 115, if it is determined that the intake refrigerant temperature Ts is less than -32°C, the process proceeds to step 130.

At step 115, if it is determined that the intake refrigerant temperature Ts is at least - 32°C and the process proceeds to step 146, then, at step 146, a determination is made as to whether the intake refrigerant temperature Ts has a previous record of being less than -32°C. Specifically, at step 146, it is determined whether the intake refrigerant temperature Ts was previously less than -32°C and subsequently rose to be at least - 32°C.

At step 146, if it is determined that the intake refrigerant temperature Ts has a previous record of being less than -32°C, the process proceeds to step 150.

As a result of the determinations at step 146 and step 150, when the intake refrigerant temperature Ts begins from a state of less than -32°C, as long as the intake refrigerant temperature Ts has not reached at least -20°C, and the current intake refrigerant temperature Ts is at least -32°C, the limited speed operation is performed. Under different circumstances, when the current intake refrigerant temperature Ts is at least -32°C, the normal operation is performed. In other words, once the speed reduction operation has finished and the intake refrigerant temperature Ts rises to at least -32°C, and while the intake refrigerant temperature Ts has not reached at least -20°C even once since performing the most recent speed reduction operation, the limited speed operation is performed instead of the normal operation. In the present embodiment, the speed reduction operation unit is configured to perform the speed reduction operation during a highest temperature range of the intake refrigerant temperature Ts within the temperature range where the intake refrigerant Ts is less than first predetermined temperature. Then, when the speed reduction operation is being performed and the intake refrigerant temperature Ts rises to reach the first predetermined temperature, the limited speed operation unit performs the limited speed operation.

According to the present embodiment, the speed control operation of the compressor 11 is the speed reduction operation, and is performed during the highest temperature range of the intake refrigerant temperature Ts within the temperature range under - 32°C, which is the first predetermined temperature. Thereafter, while the speed reduction operation is being performed and the intake refrigerant temperature Ts rises to at least the first predetermined temperature, the air conditioning control unit 40 performs the limited speed operation until the intake refrigerant temperature Ts rises to -20°C, which is the second predetermined temperature and higher than the first predetermined temperature.

As a result, when the compressor 11 is performing the speed reduction operation and the intake refrigerant temperature Ts reaches at least the first predetermined temperature, the limited speed operation is performed. Accordingly, when the speed reduction operation is called off and the control process tries to return to the normal operation, the rotational speed of the compressor 11, which was reduced by the speed reduction operation, is limited by the limited speed operation. Specifically, the limited speed operation limits the rise of the rotational speed of the compressor 11 until the intake refrigerant temperature Ts reaches the second predetermined temperature, thereby restraining the rotational speed of the compressor 11 from rapidly returning to the target rotational speed IVO. In this manner, even if the speed control operation is the speed reduction operation and is performed during the highest temperature range in the temperature range under the first predetermined temperature, hunting oscillation in the rotational speed of the compressor 11 due to low open air temperature may be prevented.

According, as compared to the first embodiment, even if the speed control operation performed by the air conditioning control unit 40 does not include a speed increase inhibition operation, hunting oscillation in the rotational speed of the compressor 11 due to low open air temperature may be prevented.

(Third Embodiment)

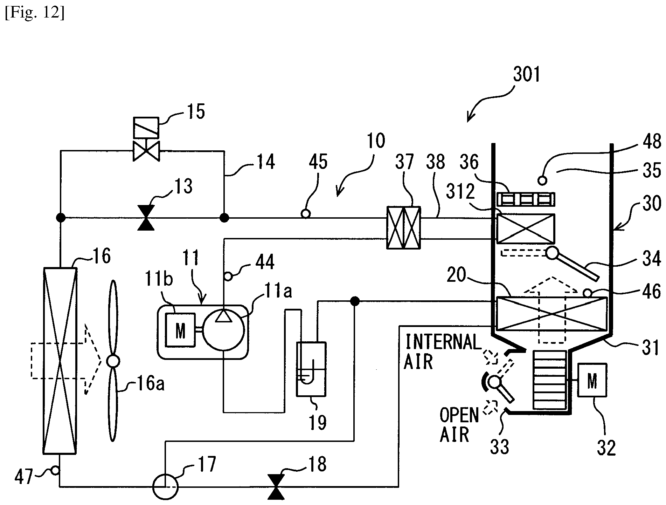

Next, a third embodiment will be explained with reference to figure 12.

In the third embodiment, the heating target fluid is different when compared to the first embodiment. Further, for portions which are the same as the first embodiment, the same reference numbers are used, and explanations thereof are omitted for brevity. Specifically, elements having the same reference numbers as the figures of the first embodiment, as well as other elements not explained in the third embodiment, are the same as those of the first embodiment, and have the same effects as the first embodiment.

As shown in figure 12, a vehicle air conditioning unit 301 according to the present embodiment includes a heat exchanger 37, which is a refrigerant-heat transfer fluid heat exchanger, that exchanges heat between a refrigerant of the heat pump cycle 10 and a heat transfer fluid. The heat exchanger 37 may, for example, exchange heat between the refrigerant and the heat transfer fluid such that the refrigerant and the heat transfer are flowing in opposite directions. In the present embodiment, the heat exchanger 37 is a heating heat exchanger. Further, in place of the internal condenser 12 of the first embodiment, a heater core 312 is provided instead of the internal condenser 12.

A refrigerant passage of the heat exchanger 37 is interposed between the compressor 11 and the heating fixed throttle 13 in the refrigerant path of the heat pump cycle 10. In other words, the outlet of the compressor 11 is connected a refrigerant inlet of the refrigerant passage of the heat exchanger 37. Further, a refrigerant outlet of the refrigerant passage of the heat exchanger 37 is connected, through the heating fixed throttle 13, to the refrigerant inlet of the external heat exchanger 16.

A heat transfer fluid passage of the heat exchanger 37 is connected to the heater core 312 through a heat transfer fluid path 38. Not illustrated, a circulating device may circulate the heat transfer fluid between the heat exchanger 37 and the heater core 312. A heat transfer fluid outlet of the heat transfer fluid passage of the heat exchanger 37 is connected to a heat transfer fluid inlet of the heater core 312. Further, a heat transfer fluid outlet of the heater core 312 is connected to a heat transfer fluid inlet of the heat transfer fluid passage of the heat exchanger 37.

The heat transfer fluid may be, for example, a liquid-phase fluid. If the heat transfer fluid does not undergo phase change, the heater core 312 may function as a heat exchanger that radiates sensible heat from the heat transfer fluid into the conditioned air. If the vehicle air conditioning unit 301 is mounted on a vehicle having, e.g., an internal combustion engine, the heat transfer fluid may be, e.g., engine coolant.

In the present embodiment, during the heating mode operation, the heat exchanger 37, which is a heating heat exchanger of the heat pump cycle 10, heats the heat transfer fluid. Then, the heated heat transfer fluid transfers heat with the ventilation air to heat the ventilation air, and the heated air is blown into the interior of the vehicle.

The heating target fluid of the present embodiment is the heat transfer fluid, which exchanges heat with, and thereby heats, conditioned air blown into the interior of the vehicle. Accordingly, when the heating operation is performed such that the heat exchanger 37 heats the heat transfer fluid and the heated heat transfer fluid heats the conditioned air, even if the open air temperature is low, hunting oscillation in the rotational speed of the compressor 11 may be prevented.

(Other Embodiments)

Above, preferable embodiments of the present disclosure are described. However, these embodiments are intended to be exemplary and the present disclosure is not limited to the above described embodiments. A variety of different embodiments are contemplated as long as these embodiments do not depart from the gist of the present disclosure. Further, the scope of the claims is intended to include all equivalent matters and reasonable modifications which do not depart from the gist of the present disclosure.

In each of the above described embodiments, the air conditioning control unit 40 controls the compressor 11 based on the intake refrigerant temperature Ts, which is the temperature of the refrigerant at the outlet of the external heat exchanger 16 and detected by the outflow temperature sensor 47. However, this point is not intended to be limiting. The intake refrigerant temperature Ts may be the temperature of the coolant discharged from the external heat exchanger 16 and being drawn by the compressor 11 during the heating operation. Further, the air conditioning control unit 40 may also control the rotational speed of the compressor 11 based on a physical quantity related to the intake refrigerant temperature Ts. A physical quantity related to the intake refrigerant temperature Ts may be, for example, the intake refrigerant pressure, the discharge refrigerant temperature, and the like.

Further, in the above described embodiments, various temperatures, such as the judgment temperatures in steps 115, 120, 130, 145, 146, and 150, and the switching temperature of the maximum allowed rotational speed of the speed control operation shown in figure 5, are described as specific temperature values. However, these values are not intended to be limiting, and other temperature values may be used. In addition, judgment temperatures, including the first and second predetermined temperatures, may be configured as predetermined temperature ranges.

Further, in the above described embodiments, an example of the maximum allowed rotational speed of the compressor 11 during the limited speed operation is shown in figure 5. However, this example is not intended to be limiting. For example, the maximum allowed rotational speed of the compressor 11 may be set to gradually increase as the intake refrigerant temperature Ts increases over the entire temperature range of the intake refrigerant temperature Ts for performing the limited speed operation. Further, for example, the maximum allowed rotational speed may be set to increase in steps as the intake refrigerant temperature Ts increases.

Further, in the above described embodiments, the air conditioning control unit 40 can switch between a plurality of modes, such as the cooling operation, as the air conditioning operation mode. However, this point is not intended to be limiting. For example, even if only the heating operation is provided, the present disclosure may still be applied.

Further, in the above described embodiments, the heat pump cycle of the present disclosure is used for a vehicle air conditioning unit. However, this point is not intended to be limiting. For example, the present disclosure may also be applied to a heat pump cycle for a stationary air conditioner unit. Further, for example, the present disclosure may also be applied to a heat pump cycle for a water heater. In the case of a water heater, the heat pump cycle absorbs heat from open air, thereby heating water. Here, the water corresponds to the heating target fluid.

**Claims**

1. A heat pump cycle device comprising:

   a compressor (11) that compresses and discharges a refrigerant;
   a heating heat exchanger (12, 37) that exchanges heat between a heating target fluid and the refrigerant, which is discharged from the compressor, to heat the heating target fluid;
   a decompression device (13) that decompresses the refrigerant flowing out of the heating heat exchanger;
   an external heat exchanger (16) that exchanges heat between open air and the refrigerant, which is decompressed by the decompression device, to evaporate the refrigerant; and
   a controller (40) that controls a rotational speed of the compressor, wherein the controller includes:

   a normal operation unit (160) that performs a normal operation where the compressor is operated with a target rotational speed (IVO) determined based on a target heating temperature (TAO) for the heating target fluid, wherein
   the normal operation unit performs the normal operation when an intake refrigerant temperature (Ts), which is a temperature of the refrigerant flowing out of the external heat exchanger and drawn by the compressor, is at least a first predetermined temperature;
   **characterized in that** the controller of the heat pump cycle device further comprises:

   a speed reduction operation unit (135) that performs a speed reduction operation where, regardless of the target rotational speed determined based on the target heating temperature, the rotational speed of the compressor is reduced below the target rotational speed of the compressor when the intake refrigerant temperature fell to the first predetermined temperature, wherein
   the speed reduction operation unit performs the speed reduction operation during at least a portion of a temperature range where the intake refrigerant temperature is less than the first predetermined temperature; and
   a limited speed operation unit (155) that performs a limited speed operation where a maximum allowed rotational speed of the compressor is limited to a predetermined speed lower than the maximum allowed rotational speed of the compressor during the normal operation, wherein:

the limited speed operation unit performs the limited speed operation when the speed reduction operation was previously performed and the intake refrigerant temperature rises to at least the first predetermined temperature, and until the intake refrigerant temperature reaches a second predetermined temperature higher than the first predetermined temperature; and

the limited speed operation unit allows a return to the normal operation when, during the limited speed operation, the intake refrigerant temperature rises to at least the second predetermined temperature.

**2.** The heat pump cycle device of claim 1, wherein

the controller further includes a speed increase inhibition operation unit (125) that performs a speed increase inhibition operation where the rotational speed of the compressor is inhibited from increasing, wherein

the speed increase inhibition operation unit performs the speed increase inhibition operation during a temperature range where the intake refrigerant temperature is below the first predetermined temperature and above the intake refrigerant temperature of when the speed reduction operation is performed,

the limited speed operation unit performs the limited speed operation when, while the speed increase inhibition operation is being performed and the speed reduction operation was previously performed, the intake refrigerant temperature rises to at least the first predetermined temperature, and

the limited speed operation unit does not perform the limited speed operation when, while the speed increase inhibition operation is being performed and the speed reduction operation was not previously performed, the intake refrigerant temperature rises to at least the first predetermined temperature.

**3.** The heat pump cycle device of claim 1, wherein

the speed reduction operation unit performs the speed reduction operation during a highest temperature range of the intake refrigerant temperature within the temperature range where the intake refrigerant temperature is less than the first predetermined temperature, and

the limited speed operation unit performs the limited speed operation when, while the speed reduction operation is being performed, the intake refrigerant temperature rises to at least the first predetermined temperature.

**4.** The heat pump cycle device of any one of claims 1 to 3, wherein the controller increases the predetermined speed of the limited speed operation as the intake refrigerant temperature increases.

**5.** The heat pump cycle device of claim 4, wherein

the controller gradually increases the predetermined speed of the limited speed operation as the intake refrigerant temperature increases.

**6.** The heat pump cycle device of any one of claims 1 to 5, wherein the heating target fluid is conditioned air that is blown into an interior of a vehicle.

**7.** The heat pump cycle device of any one of claims 1 to 5, wherein the heating target fluid is a heat transfer fluid that exchanges heat with conditioned air, which is blown into the interior of the vehicle, to heat the conditioned air.

**Patentansprüche**

**1.** Wärmepumpenkreislaufvorrichtung, die Folgendes umfasst:

einen Kompressor (11), der ein Kältemittel komprimiert und abgibt;
einen Heiz-Wärmetauscher (12, 37), der Wärme zwischen einem Heiz-Zielfluid und dem Kältemittel austauscht, das aus dem Kompressor abgegeben wird, um das Heiz-Zielfluid aufzuheizen;
eine Dekompressionsvorrichtung (13), die das aus dem Heiz-Wärmetauscher fließende Kältemittel dekomprimiert;
einen externen Wärmetauscher (16), der Wärme zwischen freier Luft und dem durch die Dekompressionsvorrichtung dekomprimierten Kältemittel austauscht, um das Kältemittel zu verdampfen; und
eine Steuerung (40), die eine Drehgeschwindigkeit des Kompressors steuert, wobei die Steuerung Folgendes enthält:

eine Normalbetriebseinheit (160), die einen Normalbetrieb durchführt, bei dem der Kompressor mit einer Zieldrehzahl (IVO) betrieben wird, die auf der Grundlage einer Zielheiztemperatur (TAO) für das Heizzielfluid bestimmt wird, wobei
die Normalbetriebseinheit den Normalbetrieb durchführt, wenn eine Kältemittel-Einlasstemperatur (Ts), die eine Temperatur des aus dem externen Wärmetauscher fließenden und vom Kompressor angesaugten Kältemittels ist, zumindest eine erste vorgegebene Temperatur ist;
**dadurch gekennzeichnet, dass** die Steuerung der Wärmepumpenkreislaufvorrichtung ferner Folgendes umfasst:

eine Drehzahl-Absenkungseinheit (135), die eine Drehzahlabsenkung vornimmt, bei der unabhängig von der Zieldrehzahl, die auf der Grundlage der Ziel-Heiztemperatur bestimmt wird, die Drehzahl des Kompressors unter die Zieldrehzahl des Kompressors abgesenkt wird, wenn die Kältemittel-Einlasstemperatur auf die erste vorbestimmte Temperatur gesunken ist, wobei
die Drehzahl-Absenkungseinheit die Drehzahlabsenkung während mindestens eines Abschnitts eines Temperaturbereichs durchführt, in dem die Kältemittel-Einlasstemperatur niedriger ist als die erste vorbestimmte Temperatur; und
eine Betriebseinheit (155) mit begrenzter Drehzahl, die einen Betrieb mit begrenzter Drehzahl durchführt, bei dem eine maximal zulässige Drehzahl des Kompressors auf eine vorbestimmte Drehzahl begrenzt ist, die niedriger ist als die maximal zulässige Drehzahl des Kompressors während des normalen Betriebs, wobei:

die Betriebseinheit mit begrenzter Drehzahl den Betrieb mit begrenzter Drehzahl ausführt, wenn die Drehzahlabsenkung zuvor durchgeführt wurde und die Kältemittel-Einlasstemperatur auf zumindest die erste vorbestimmte Temperatur ansteigt, und bis die Kältemittel-Einlasstemperatur eine zweite vorbestimmte Temperatur erreicht, die höher als die erste vorbestimmte Temperatur ist; und
die Betriebseinheit mit begrenzter Drehzahl eine Rückkehr zum Normalbetrieb zulässt, wenn während des Betriebs mit begrenzter Drehzahl die Kältemittel-Einlasstemperatur auf zumindest die zweite vorbestimmte Temperatur ansteigt.

2. Wärmepumpenkreislaufvorrichtung nach Anspruch 1, wobei
die Steuerung ferner eine Betriebseinheit (125) zur Hemmung des Drehzahlanstiegs umfasst, die eine Drehzahlanstiegshemmung durchführt, bei der die Drehzahl des Kompressors am Anstieg gehindert wird, wobei
die Betriebseinheit zur Hemmung des Drehzahlanstiegs die Drehzahlanstiegshemmung in einem Temperaturbereich durchführt, in dem die Kältemittel-Einlasstemperatur unterhalb der ersten vorbestimmten Temperatur und oberhalb der Kältemittel-Einlasstemperatur des Moments liegt, in dem die Drehzahlabsenkung vorgenommen wird,
die Betriebseinheit mit begrenzter Drehzahl den Betrieb mit begrenzter Drehzahl durchführt, wenn, während die Drehzahlanstiegshemmung durchgeführt wird und die Drehzahlabsenkung vorher durchgeführt worden war, die Kältemittel-Einlasstemperatur bis zumindest zur ersten vorbestimmten Temperatur ansteigt und
die Betriebseinheit mit begrenzter Drehzahl keinen Betrieb mit begrenzter Drehzahl durchführt, wenn, während die Drehzahlanstiegshemmung durchgeführt wird, und die Drehzahlabsenkung vorher nicht durchgeführt worden war, die Kältemittel-Einlasstemperatur bis zumindest zur ersten vorbestimmten Temperatur ansteigt.

3. Wärmepumpenkreislaufvorrichtung nach Anspruch 1, wobei
die Drehzahl-Absenkungseinheit die Drehzahlabsenkung während eines höchsten Temperaturbereichs der Kältemittel-Einlasstemperatur im Temperaturbereich durchführt, in dem die Kältemittel-Einlasstemperatur niedriger als die erste vorbestimmte Temperatur ist, und
die Betriebseinheit mit begrenzter Drehzahl den Betrieb mit begrenzter Drehzahl durchführt, wenn, während die Drehzahlabsenkung durchgeführt wird, die Kältemittel-Einlasstemperatur zumindest bis zur ersten vorbestimmten Temperatur ansteigt.

4. Wärmepumpenkreislaufvorrichtung nach einem der Ansprüche 1 bis 3, wobei die Steuerung die vorbestimmte Drehzahl des Betriebs mit begrenzter Drehzahl erhöht, während die Kältemittel-Einlasstemperatur ansteigt.

5. Wärmepumpenkreislaufvorrichtung nach Anspruch 4, wobei die Steuerung schrittweise die vorbestimmte Drehzahl des Betriebs mit begrenzter Drehzahl erhöht, während die Kältemittel-Einlasstemperatur ansteigt.

6. Wärmepumpenkreislaufvorrichtung nach einem der Ansprüche 1 bis 5, wobei die Heiz-Zielflüssigkeit klimatisierte Luft ist, die in einen Innenraum eines Fahrzeugs eingeblasen wird.

**7.** Wärmepumpenkreislaufvorrichtung nach einem der Ansprüche 1 bis 5, wobei das Heiz-Zielfluid ein Wärmeträgerfluid ist, das Wärme mit klimatisierter Luft austauscht, die in den Innenraum des Fahrzeugs eingeblasen wird, um die klimatisierte Luft aufzuheizen.

**Revendications**

**1.** Dispositif à cycle de pompe à chaleur, comprenant :

un compresseur (11) qui comprime et refoule un fluide frigorigène ;
un échangeur de chaleur de chauffage (12, 37) qui échange de la chaleur entre un fluide de chauffage cible et le fluide frigorigène qui est refoulé par le compresseur, pour chauffer le fluide de chauffage cible ;
un dispositif de décompression (13) qui décomprime le fluide frigorigène s'écoulant hors de l'échangeur de chaleur de chauffage ;
un échangeur de chaleur externe (16) qui échange de la chaleur entre l'air ambiant et le fluide frigorigène qui est décomprimé par le dispositif de décompression, pour évaporer le fluide frigorigène ; et
un dispositif de commande (40) qui régule une vitesse de rotation du compresseur, dans lequel le dispositif de commande comporte :

une unité de fonctionnement normal (160) qui met en oeuvre un fonctionnement normal où le compresseur est utilisé à une vitesse de rotation cible (IVO) déterminée sur la base d'une température de chauffage cible (TAO) du fluide de chauffage cible, dans lequel :

l'unité de fonctionnement normal met en oeuvre le fonctionnement normal lorsqu'une température d'admission de fluide frigorigène (Ts) qui est une température du fluide frigorigène s'écoulant hors de l'échangeur de chaleur externe et aspiré par le compresseur, est au moins égale à une première température prédéterminée ;
**caractérisé en ce que** le dispositif de commande du dispositif à cycle de pompe à chaleur comprend en outre :

une unité de mise en oeuvre de réduction de vitesse (135) qui réalise une opération de réduction de vitesse où, indépendamment de la vitesse de rotation cible déterminée sur la base de la température de chauffage cible, la vitesse de rotation du compresseur est ramenée au-dessous de la vitesse de rotation cible du compresseur, lorsque la température d'admission de fluide frigorigène a chuté à la première température prédéterminée, dans lequel l'unité de mise en oeuvre de réduction de vitesse réalise l'opération de réduction de vitesse pendant au moins une partie de plage de températures où la température d'admission de fluide frigorigène est inférieure à la première température prédéterminée ; et
une unité de fonctionnement à vitesse limitée (155) qui met en oeuvre un fonctionnement à vitesse limitée où une vitesse de rotation maximum autorisée du compresseur est limitée à une vitesse prédéterminée, inférieure à la vitesse de rotation maximum autorisée du compresseur au cours du fonctionnement normal, dans lequel :

l'unité de fonctionnement à vitesse limitée met en oeuvre le fonctionnement à vitesse limitée, lorsque l'opération de réduction de vitesse a été préalablement réalisée et que la température d'admission de fluide frigorigène s'élève au moins à la première température prédéterminée, et jusqu'à ce que la température d'admission de fluide frigorigène atteigne une seconde température prédéterminée, supérieure à la première température prédéterminée ; et
l'unité de fonctionnement à vitesse limitée permet un retour au fonctionnement normal, lorsque, au cours du fonctionnement à vitesse limitée, la température d'admission de fluide frigorigène s'élève au moins à la seconde température prédéterminée.

**2.** Dispositif à cycle de pompe à chaleur selon la revendication 1, dans lequel :

le dispositif de commande comporte en outre une unité de mise en oeuvre d'inhibition d'augmentation de vitesse (125) qui réalise une opération d'inhibition d'augmentation de vitesse où une augmentation de la vitesse de rotation du compresseur est inhibée, dans lequel :

l'unité de mise oeuvre d'inhibition d'augmentation de vitesse réalise l'opération d'inhibition d'augmentation de vitesse au cours d'une plage de températures où la température d'admission de fluide frigorigène est inférieure à la première température prédéterminée et supérieure à la température d'admission de fluide frigorigène du moment où l'opération de réduction de vitesse est réalisée,

l'unité de fonctionnement à vitesse limitée met en oeuvre le fonctionnement à vitesse limitée lorsque, tandis que l'opération d'inhibition d'augmentation de vitesse est en cours de réalisation et que l'opération de réduction de vitesse a été précédemment réalisée, la température d'admission de fluide frigorigène s'élève au moins à la première température prédéterminée, et

l'unité de fonctionnement à vitesse limitée ne met pas en oeuvre le fonctionnement à vitesse limitée lorsque, tandis que l'opération d'inhibition d'augmentation de vitesse est en cours de réalisation et que l'opération de réduction de vitesse n'a pas été préalablement réalisée, la température d'admission de fluide frigorigène s'élève au moins à la première température prédéterminée.

3. Dispositif à cycle de pompe à chaleur selon la revendication 1, dans lequel :

l'unité de mise en oeuvre de réduction de vitesse réalise l'opération de réduction de vitesse au cours de la plage de températures la plus élevée de la température d'admission de fluide frigorigène au sein de la plage de températures où la température d'admission de fluide frigorigène est inférieure à la première température prédéterminée, et

l'unité de fonctionnement à vitesse limitée met en oeuvre le fonctionnement à vitesse limitée lorsque, tandis que l'opération de réduction de vitesse est en cours de réalisation, la température d'admission de fluide frigorigène s'élève au moins à la première température prédéterminée.

4. Dispositif à cycle de pompe à chaleur selon l'une quelconque des revendications 1 à 3, dans lequel le dispositif de commande augmente la vitesse prédéterminée du fonctionnement à vitesse limitée, à mesure que la température d'admission de fluide frigorigène augmente.

5. Dispositif à cycle de pompe à chaleur selon la revendication 4, dans lequel le dispositif de commande augmente progressivement la vitesse prédéterminée du fonctionnement à vitesse limitée, à mesure que la température d'admission de fluide frigorigène augmente.

6. Dispositif à cycle de pompe à chaleur selon l'une quelconque des revendications 1 à 5, dans lequel le fluide de chauffage cible est de l'air conditionné qui est soufflé à l'intérieur d'un véhicule.

7. Dispositif à cycle de pompe à chaleur selon l'une quelconque des revendications 1 à 5, dans lequel le fluide de chauffage cible est un fluide de transfert de chaleur qui échange de la chaleur avec l'air conditionné qui est soufflé à l'intérieur du véhicule, pour chauffer l'air conditionné.

[Fig. 1]

[Fig. 2]

[Fig. 3]

```
              ┌──────────────┐
              │    START     │
              └──────┬───────┘
                     │              ╭60
                     ▼
              ┌──────────────┐
      ┌──────▶│ INPUT SIGNALS│
      │       └──────┬───────┘
      │              │              ╭65
      │              ▼
      │       ┌──────────────┐
      │       │ CALCULATE TAO│
      │       └──────┬───────┘
      │              │              ╭70
      │              ▼
      │       ┌──────────────┐
      │       │  DETERMINE   │
      │       │OPERATION MODE│
      │       └──────┬───────┘
      │              │         ╭75
      │              ▼
      │          ╱────────╲   NO
      │         ╱ HEATING   ╲──────────────┐
      │         ╲OPERATION? ╱              │
      │          ╲────────╱                │
      │              │ YES             ╭85 │
      │              │                     ▼
      │              │               ╱──────────╲   NO
      │              │              ╱  COOLING    ╲──────────────┐
      │              │              ╲ OPERATION? ╱               │
      │              │               ╲──────────╱                │
      │              │                    │ YES   ╭90            │
      │          ╭80 ▼                    ▼                      ▼
      │    ┌──────────────┐      ┌──────────────┐    ┌──────────────────┐
      │    │ HEATING MODE │      │ COOLING MODE │    │ DEHUMID. HEATING  │
      │    │   OUTPUTS    │      │   OUTPUTS    │    │   MODE OUTPUTS    │
      │    └──────┬───────┘      └──────┬───────┘    └─────────┬────────┘
      │           │                     │                      │
      └───────────┴─────────────────────┴──────────────────────┘
```

[Fig. 4]

EP 3 161 392 B1

HEATING OPERATION
COMPRESSOR CONTROL

100 — OBTAIN TAO

105 — CALCULATE IVO

110 — OBTAIN Ts

115 — Ts ≥ -32°C?

145 — RECORD OF Ts < -34°C?

150 — Ts ≥ -20°C?

120 — Ts ≥ -34°C?

130 — Ts ≥ -35°C?

160 — NORMAL OPERATION WITH IVO

155 — LIMITED SPEED

125 — SPEED INCREASE INHIBITION

135 — SPEED REDUCTION

140 — STOP COMPRESSOR

[Fig. 5]

LIMITED SPEED
OPERATION    NORMAL OPERATION

[Fig. 6]

COOLING OPERATION

[Fig. 7]

DEHUMIDIFICATION HEATING OPERATION

[Fig. 8]

HEATING OPERATION

[Fig. 9]

EP 3 161 392 B1

[Fig. 10]

EP 3 161 392 B1

27

[Fig. 11]

EP 3 161 392 B1

Fig. 11

[Fig. 12]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011140291 A

- US 6293123 B1